# EUROPEAN PATENT APPLICATION

(11) **EP 4 804 246 A1**
(43) Date of publication of application: **09.09.2026**
(21) Application number: 24885547.0
(22) Date of filing: 23.10.2024
(51) Int. Cl.: H01M 4/13, H01M 4/38, H01M 10/0587, H01M 50/531

(54) **NONAQUEOUS ELECTROLYTE SECONDARY BATTERY**

(30) Priority: 30.10.2023 JP 2023185237
(71) Applicant: Panasonic Intellectual Property Management Co., Ltd., Kadoma-shi, Osaka 571-0057 (JP)
(72) Inventor: FUKUI, Kosuke, Osaka 571-0057 (JP); WAKABAYASHI, Hiromichi, Osaka 571-0057 (JP); IMAOKU, Takao, Osaka 571-0057 (JP); ITO, Katsuya, Osaka 571-0057 (JP)
(74) Representative: Eisenführ Speiser
(86) International application number: PCT/JP2024/037668
(87) International publication number: WO 2025/094774

(57) **Abstract**

The present invention provides a nonaqueous electrolyte secondary battery which is capable of achieving high output. A nonaqueous electrolyte secondary battery according to one embodiment of the present disclosure includes: a wound electrode body which is obtained by winding a belt-shaped positive electrode and a belt-shaped negative electrode, with a separator being interposed therebetween; and an outer package which houses the electrode body. The positive electrode has a positive electrode current collector and a positive electrode mixture layer that is formed on the surface of the positive electrode current collector. A positive electrode current collector exposed part, in which the positive electrode current collector is exposed, is formed in the surface of the positive electrode. A positive electrode tab is connected to the positive electrode current collector exposed part. The positive electrode mixture layer has a normal part and thick parts that are thicker than the normal part. The thick parts are close to both ends of the positive electrode current collector exposed part in the longitudinal direction of the positive electrode.

## Description

### TECHNICAL FIELD

The present disclosure relates to non-aqueous electrolyte secondary batteries, and more particularly relates to a non-aqueous electrolyte secondary battery comprising a wound electrode assembly.

### BACKGROUND ART

Conventionally, non-aqueous electrolyte secondary batteries have widely been used, in which a wound electrode assembly, formed by winding a strip-shaped positive electrode and negative electrode, is housed in an outer casing. Patent Literature 1 discloses a secondary battery comprising a wound electrode assembly, which discloses a technology to improve current collectivity by providing a positive electrode current collector exposed portion, where a positive electrode current collector is exposed, at a substantially center position of a positive electrode in a longitudinal direction and connecting the positive electrode current collector exposed portion to a positive electrode tab.

### CITATION LIST

### PATENT LITERATURE

PATENT LITERATURE 1: Japanese Unexamined Patent Application Publication No. 2008-234855

### SUMMARY

Incidentally, in a secondary battery with a wound electrode assembly housed in an outer casing, a large pressure may be applied to a positive electrode tab due to expansion of a negative electrode during charging. In particular, after a charge and discharge cycle is repeated, the electrode assembly is expanded, so that the pressure applied to the positive electrode tab becomes even greater.

In recent years, output power demanded for non-aqueous electrolyte secondary batteries becomes higher and higher. To reduce current density, the positive electrode mixture layer may be made thinner and the positive electrode tab may be made thicker. In both cases, the pressure applied to the positive electrode tab increases, which raises a concern about a damage on the positive electrode current collector around the positive electrode tab. The technology disclosed in Patent Literature 1 does not take into account the pressure applied to the positive electrode tab and therefore, has still room for improvement in response to the demand for higher power output.

It is an advantage of the present invention to provide a non-aqueous electrolyte secondary battery capable of achieving high power output.

A non-aqueous electrolyte secondary battery in one aspect of the present disclosure comprises: a wound electrode assembly having a strip-shaped positive electrode and negative electrode wound with a separator in between; and an outer casing that houses the electrode assembly, in which the positive electrode includes a positive electrode current collector and a positive electrode mixture layer formed on a surface of the positive electrode current collector, a positive electrode current collector exposed portion is formed on a surface of the positive electrode, the positive electrode current collector exposed portion being a portion where the positive electrode current collector is exposed, the positive electrode current collector exposed portion being connected to a positive electrode tab, the positive electrode mixture layer includes normal portions and thick-walled portions that are thicker than the normal portions, and the thick-walled portions are in proximity to both ends of the positive electrode current collector exposed portion in a longitudinal direction of the positive electrode.

According to the non-aqueous electrolyte secondary battery of the present disclosure, improvement of the output can be achieved.

### BRIEF DESCRIPTION OF DRAWING

FIG. 1 is an axial sectional view of a cylindrical secondary battery as one example of an embodiment.
FIG. 2 is a perspective view of a wound electrode assembly comprised in the secondary battery shown in FIG. 1.
FIG. 3 is a plan view showing the vicinity of a positive electrode tab of a positive electrode according to one example of the embodiment in an expanded state.
FIG. 4 is a sectional view along an A-A line of FIG. 3.
FIG. 5 is a radially sectional view of an electrode assembly according to one example of the embodiment, with the vicinity of the positive electrode tab being enlarged.

### DESCRIPTION OF EMBODIMENTS

Hereinafter, one example of an embodiment of a cylindrical secondary battery according to the present disclosure will be described in detail with reference to the drawings. In the following description, specific shapes, materials, numerical values, directions, or the like, are examples for easy understanding of the present disclosure, and they can be appropriately changed in accordance with the specifications of the cylindrical secondary battery. Moreover, when a plurality of embodiments or modifications are included in the following description, it is assumed from the beginning that their characteristic portions are combined and used as appropriate.

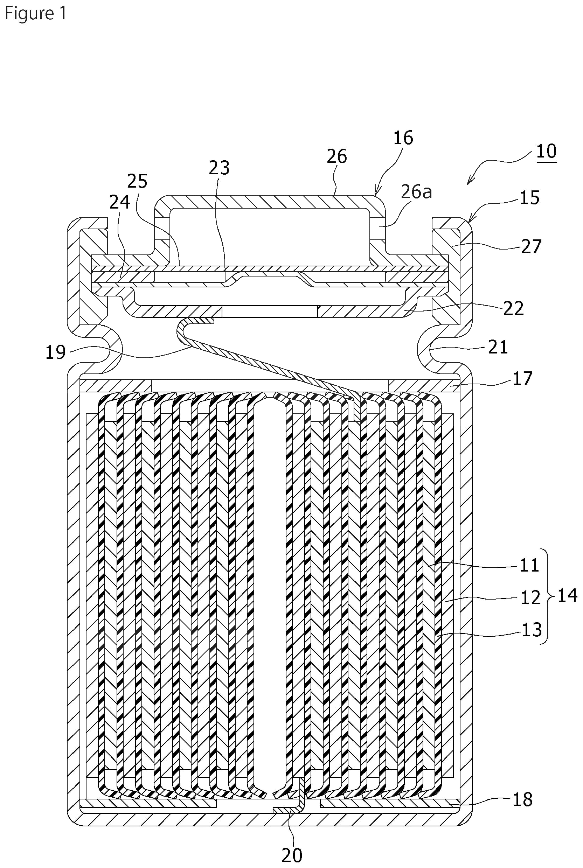

FIG. 1 is an axial sectional view of a cylindrical secondary battery 10 as one example of the embodiment. In the secondary battery 10 shown in FIG. 1, an electrode assembly 14 and non-aqueous electrolyte (not shown) are housed in an outer casing 15. The electrode assembly 14 has a wound structure in which a strip-shaped positive electrode 11 and negative electrode 12 are wound with a separator 13 in between. As a non-aqueous solvent (organic solvents) of the non-aqueous electrolyte, there may be used carbonates, lactones, ethers, ketones, esters, or the like, and two or more of these solvents can be mixed and used. When two or more of these solvents are mixed and used, a mixed solvent containing cyclic carbonates and chain carbonates is preferably used. Examples of the cyclic carbonates to be used may include ethylene carbonate (EC), propylene carbonate (PC), and butylene carbonate (BC), and examples of the chain carbonates to be used may include dimethylcarbonate (DMC), ethylmethylcarbonate (EMC), and diethylcarbonate (DEC). As electrolyte salt of the non-aqueous electrolyte, LiPF₆, LiBF₄, LiCF₃SO₃, or the like and mixtures of these may be used. The amount of electrolyte salt dissolved in the non-aqueous solvent may be, for example, greater than or equal to 0.5 mol/L and less than or equal to 2.0 mol/L. Hereinafter, for the convenience of description, the side of a sealing assembly 16 is defined as "upper side", and a bottom side of the outer casing 15 is defined as "lower side".

The inside of the secondary battery 10 is sealed by closing an opening portion of the outer casing 15 with the sealing assembly 16. Insulating plates 17 and 18 are provided above and below the electrode assembly 14, respectively. A positive electrode tab 19 extends upward through a through-hole of the insulating plate 17 and is welded to the lower surface of a filter 22, which is a bottom plate of the sealing assembly 16. In the secondary battery 10, a cap 26, which is the top plate of the sealing assembly 16 electrically connected with the filter 22, serves as a positive electrode terminal. On the other hand, a negative electrode tab 20 extends toward a bottom of the outer casing 15 through a through-hole of the insulating plate 18, and is welded to the inner surface of the bottom of the outer casing 15. In the secondary battery 10, the outer casing 15 serves as a negative electrode terminal. Here, when the negative electrode tab 20 is installed in the vicinity of a winding terminal end, the negative electrode tab 20 extends toward the bottom of the outer casing 15 along the outside of the insulating plate 18, and is welded to the inner surface of the bottom of the outer casing 15.

The outer casing 15 is, for example, a metallic outer casing in a bottomed cylindrical shape. Between the outer casing 15 and the sealing assembly 16, a gasket 27 is provided to ensure sealability of the inside of the secondary battery 10. The outer casing 15 includes a grooved portion 21 formed by, for example, pressing a side surface portion from outside to support the sealing assembly 16. The grooved portion 21 is preferably formed in an annular shape along a circumferential direction of the outer casing 15 to support the sealing assembly 16 with its upper surface.

The sealing assembly 16 includes the filter 22, a lower vent member 23, an insulating member 24, an upper vent member 25, and the cap 26 stacked in this order from the side of the electrode assembly 14. Each member constituting the sealing assembly 16 has, for example, a disc shape or a ring shape, and each member except the insulating member 24 is electrically connected to each other. The lower vent member 23 and the upper vent member 25 are connected to each other at their respective center portions with the insulating member 24 interposed between their respective circumferential edge portions. When the internal pressure of the battery rises due to abnormal heat generation, the lower vent member 23 breaks, for example, and this causes the upper vent member 25 to swell toward the cap 26 and be separated from the lower vent member 23, so that the electrical connection between both members is cut off. As the internal pressure further rises, the upper vent member 25 breaks, so that gas is exhausted through an opening portion 26a of the cap 26.

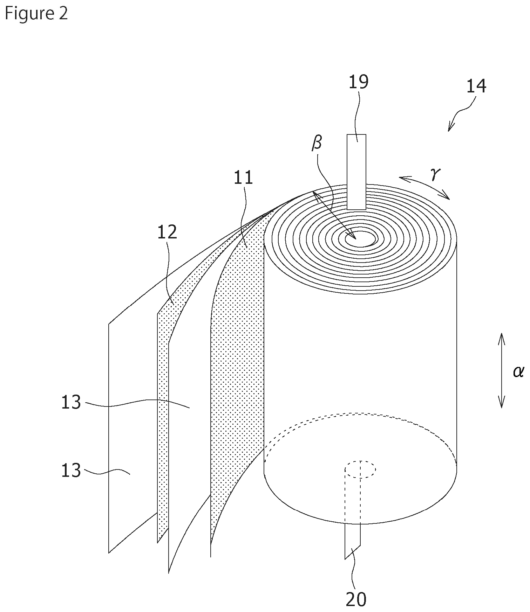

Description is now given of the electrode assembly 14 with reference to FIG. 2. FIG. 2 is a perspective view of the electrode assembly 14. The electrode assembly 14 has a winding structure in which the positive electrode 11 and the negative electrode 12 are wound in a spiral shape with the separator 13 in between as described above. The positive electrode 11, the negative electrode 12, and the separator 13, which are all formed into a strip shape, are wound in a spiral shape around a winding axis so as to be stacked alternately in a radial direction β of the electrode assembly 14. In the radial direction β, the side of the winding axis is referred to as a winding inner side, and its opposite side is referred to as a winding outer side. In the electrode assembly 14, the longitudinal direction of the positive electrode 11 and the negative electrode 12 is a winding direction γ, and the width direction of the positive electrode 11 and the negative electrode 12 is an axial direction α. In the winding direction γ, the side of the winding axis is referred to as a winding start side, and its opposite side is referred to as a winding terminal side. At the upper end of the electrode assembly 14, the positive electrode tab 19 extends in the axial direction α from substantially the center in a radial direction extending from the center to the outermost circumference of the electrode assembly 14. In this case, a positive electrode current collector exposed portion described later is provided at substantially the center of the positive electrode 11 in the longitudinal direction, the positive electrode current collector exposed portion being connected to the positive electrode tab 19. At the lower end of the electrode assembly 14, the negative electrode tab 20 extends in the axial direction α from the vicinity of the winding axis.

The negative electrode 12 includes a strip-shaped negative electrode current collector, a negative electrode mixture layer formed on both the surfaces of the negative electrode current collector, and a negative electrode current collector exposed portion where the negative electrode current collector is exposed. The negative electrode current collector has a thickness of, for example, greater than or equal to 5 µm and less than or equal to 30 µm. The thickness of the negative electrode mixture layer is, for example, greater than or equal to 10 µm and less than or equal to 150 µm on one side of the negative electrode current collector. For the negative electrode current collector, there may be used, for example, a foil of metal, such as copper, that is stable in a potential range of the negative electrode 12 or a film with the metal arranged on the surface layer thereof. The negative electrode mixture layer includes, for example, a negative electrode active material and a binding agent. The negative electrode 12 is fabricated by, for example, applying negative electrode mixture slurry containing a negative electrode active material, a binding agent, water or the like to the surface of the negative electrode current collector, and drying and rolling it to form a negative electrode mixture layer on both the surfaces of the negative electrode current collector.

In the present embodiment, the negative electrode tab 20 is joined to an outer circumferential-side surface of the negative electrode current collector, for example, by ultrasonic welding. The negative electrode tab 20 has one end portion arranged at the negative electrode current collector exposed portion and the other end portion extending downward from the lower end of the negative electrode current collector exposed portion. The arrangement position of the negative electrode tab 20 is not limited to a winding inner end portion as shown in FIG. 2, and may be any position in the longitudinal direction γ in the range from the winding inner end portion to the winding outer end portion. The negative electrode current collector exposed portion is provided, for example, by intermittent application in which the negative electrode mixture slurry is not applied to some region of the negative electrode current collector.

The negative electrode active material contained in the negative electrode mixture layer is not particularly limited as long as it can reversibly store and release lithium ions, and typically, carbon materials such as graphite may be used. Graphite may be any one of natural graphite such as flake graphite, massive graphite, and earthy graphite, and artificial graphite such as massive artificial graphite, and graphitized mesophase carbon microbeads.

As the negative electrode active material, there may be used, for example, metal that alloys with Li such as Si and Sn, metal compounds containing Si, Sn, or the like, and lithium titanium composite oxides. For example, an Si-containing compound represented by SiOₓ(0.5≤x≤1.6), an Si-containing compound represented by Li_{2y}SiO_{(2+y)}(0<y<2) in which Si particles are dispersed in a lithium silicate phase, or an Si-containing compound in which Si is dispersed in a carbon material may be used in combination with graphite. When the negative electrode mixture layer contains an Si-containing compound, the battery capacity can be increased, but the rate of expansion of the negative electrode 12 at the time of charging increases. Therefore, when the negative electrode mixture layer contains an Si-containing compound, the pressure applied to the positive electrode tab 19 tends to increase, so that the effect of the thick-walled portion on the positive electrode mixture layer described later becomes more pronounced.

Examples of the binding agent contained in the negative electrode mixture layer may include styrene-butadiene rubber (SBR), nitrile-butadiene rubber (NBR), carboxymethylcellulose (CMC) or its salts, polyacrylic acid (PAA) or its salts (such as PAA-Na and PAA-K, or partially neutralized salts), and polyvinyl alcohol (PVA). Any one of these materials may be used independently, or two or more of these materials may be used combinedly.

As the separator 13, for example, a porous sheet with ion permeability and insulation properties is used. Specific examples of the porous sheet may include microporous thin films, woven fabrics, and non-woven fabrics. As the materials of the separator, olefin resin such as polyethylene and polypropylene, cellulose, and the like are preferable. The separator 13 may be a laminate having a cellulose fiber layer and a thermoplastic resin fiber layer made of olefin resin or the like. The separator 13 may be a multi-layer separator including a polyethylene layer and a polypropylene layer, and may also have a material, such as aramid resin and ceramic, coated on the surface thereof.

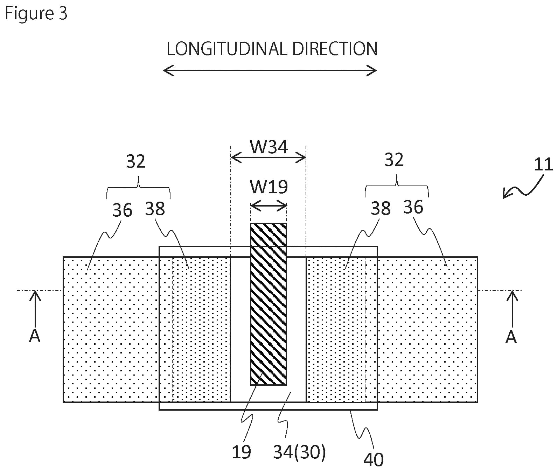

Detailed description is now given of the positive electrode 11 with reference to FIGS. 3 to 5. FIG. 3 is a plan view showing the vicinity of the positive electrode tab 19 of the positive electrode 11 according to one example of the embodiment in an expanded state. The positive electrode 11 includes a strip-shaped positive electrode current collector 30 and a positive electrode mixture layer 32 formed on the surface of the positive electrode current collector 30.

Examples of the positive electrode current collector 30 to be used include a foil of metal such as aluminum or a film with the metal arranged on the surface thereof. The preferable positive electrode current collector 30 is a metal foil having aluminum or aluminum alloy as a main component. The positive electrode current collector 30 has a thickness of, for example, greater than or equal to 10 µm and less than or equal to 30 µm.

The positive electrode mixture layer 32 preferably contains a positive electrode active material, a conductive agent, and a binding agent. The positive electrode 11 is fabricated by applying a positive electrode mixture slurry containing a positive electrode active material, a conductive agent, a binding agent, and a solvent such as N-methyl-2-pyrrolidone (NMP) to both surfaces of the positive electrode current collector 30 and then drying and rolling it.

Examples of the positive electrode active material to be used may include lithium-containing transition metal oxides, containing transition metal elements such as Co, Mn, and Ni. Although the lithium-containing transition metal oxides are not particularly limited, they are preferably compound oxides expressed by a general formula Li_{1 + x}MO₂ (in which -0.2 < x ≤ 0.2, where M includes at least one of the group consisting of Ni, Co, Mn, and Al).

As the conductive agent contained in the positive electrode mixture layer 32, there may be used, for example, acetylene black (AB), carbon black (CB) such as ketjen black, and carbon materials such as graphite. As the binding agent contained in the positive electrode mixture layer 32, there may be used, for example, fluororesin such as polytetrafluoroethylene (PTFE), and polyvinylidene difluoride (PVDF), polyacrylonitrile (PAN), polyimide (PI), acrylic resin, and polyolefin resin. These resins may be used together with carboxymethylcellulose (CMC) or its salts, polyethylene oxide (PEO), or the like. Any one of these materials may be used independently, or two or more of these materials may be used combinedly.

On the surface of the positive electrode 11, a positive electrode current collector exposed portion 34 is formed that is a portion where the positive electrode current collector 30 is exposed, the positive electrode current collector exposed portion 34 being connected to the positive electrode tab 19. The positive electrode current collector exposed portion 34, which is the surface of the positive electrode current collector 30 not covered with the positive electrode mixture layer 32, is provided, for example, by intermittent application in which the positive electrode mixture slurry is not applied to some region of the positive electrode current collector 30. The positive electrode current collector exposed portion 34 has a width W34 that is, for example, greater than or equal to 5 mm and less than or equal to 15 mm. In addition, the positive electrode tab 19 has a width W19 that is not particularly limited as long as it is smaller than the width W34 of the positive electrode current collector exposed portion 34, and the width W19 may be greater than or equal to 1 mm and less than or equal to 10 mm, for example.

In the longitudinal direction of the positive electrode 11, the positive electrode mixture layer 32 is adjacent to both ends of the positive electrode current collector exposed portion 34. In the present embodiment, to improve the current collectivity, the positive electrode current collector exposed portion 34 is formed at substantially the center of the positive electrode 11 in the longitudinal direction. The position of the positive electrode current collector exposed portion 34 is not particularly limited as long as the positive electrode mixture layer 32 is adjacent to both the ends of the positive electrode current collector exposed portion 34 in the longitudinal direction of the positive electrode 11.

The positive electrode mixture layer 32 has thick-walled portions 38, which are thicker than normal portions 36, the thick-walled portions 38 being in proximity to both ends of the positive electrode current collector exposed portion 34 in the longitudinal direction of the positive electrode 11. This can reduce the pressure applied to the positive electrode tab 19 and prevent damage to the positive electrode current collector 30. In this specification, the normal portions 36 refers to regions of the positive electrode mixture layer 32 that are other than the thick-walled portions 38 provided in the vicinity of the positive electrode current collector exposed portion 34.

The entire surfaces of the thick-walled portions 38 are covered with a protective tape 40. This prevents more non-aqueous electrolytes from being released from the thick-walled portions 38 than those released from the normal portions 36, thereby deposition of non-aqueous electrolytes or the like on the opposite negative electrode 12 is restrained and reliability of the battery is improved. The protective tape 40 is stuck to the surface of the positive electrode 11 so as to cover the entire surfaces of the thick-walled portions 38 over the positive electrode current collector exposed portion 34 as shown in FIG. 3, for example.

The protective tape 40 has, for example, a base material layer and an adhesive layer formed on the surface of the base material layer. The protective tape 40 has a width of, for example, greater than or equal to 20 µm and less than or equal to 70 µm. The main component of the base material layer is, for example, resin such as polypropylene (PP). The main component of the adhesive layer is, for example, an acrylic-based adhesive or a synthetic rubber-based adhesive. Here, the protective tape 40 is not limited to a two-layer structure, and may be a three-layer structure in which a layer containing inorganic particles is formed between the base material layer and the adhesive layer, for example.

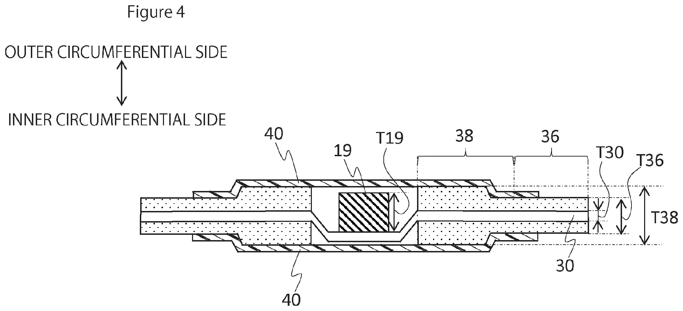

A description is now given of the cross-sectional structure of the positive electrode 11 with reference to FIG. 4. FIG. 4 is a sectional view along an A-A line of FIG. 3. In the present embodiment, the positive electrode mixture layer 32 is formed on both the surfaces of the positive electrode current collector 30, while the positive electrode current collector exposed portion 34, the normal portions 36, and the thick-walled portions 38 are each provided at facing positions on both the surfaces of the positive electrode current collector 30. The positive electrode mixture layers 32 provided on the inner and outer circumferential sides of the positive electrode current collector 30 may have the same shape as each other.

A thickness T36 of the normal portions 36 and a thickness T38 of the thick-walled portions 38 are the sum of the thickness of the positive electrode mixture layer 32 provided on both the surfaces of the positive electrode current collector 30 and the thickness of the positive electrode current collector 30 at the regions corresponding to the respective portions. The thickness T36 of the normal portions 36 is substantially constant, and the surface of the positive electrode 11 at the regions corresponding to the normal portions 36 is substantially parallel to the surface of the positive electrode current collector 30. The thickness T38 of the thick-walled portions 38 is substantially constant, except for inclined portions formed in regions that are in contact with the normal portions 36, and the surface of the positive electrode 11 at regions corresponding to the thick-walled portions 38 is substantially parallel to the surface of the positive electrode current collector 30. In this specification, the thickness of the thick-walled portions 38 refers to the thickness of the thick-walled portions 38 excluding the inclined portions. Here, the thick-walled portions 38 may have inclined portions at the regions that are in contact with the positive electrode current collector exposed portion 34. As long as the thick-walled portions 38 are in proximity to the positive electrode current collector exposed portion 34, some region of the inclined portions may be smaller than the thickness of the normal portions.

The positive electrode tab 19 is connected to the outer circumferential-side surface of the positive electrode current collector 30. The configuration of the positive electrode 11 is not limited to the example shown in FIG. 3. The positive electrode mixture layer 32 may be formed only on one surface of the positive electrode current collector 30, and the positive electrode tab 19 may be connected to the inner circumferential-side surface of the positive electrode current collector 30. The positive electrode mixture layer 32 is preferably provided at least on one surface of the positive electrode current collector 30, where the positive electrode tab 19 is connected.

The positive electrode tab 19 has a thickness T19 that is smaller than the total thickness of the positive electrode mixture layer 32 at the regions corresponding to the thick-walled portions 38 and greater than the total thickness of the positive electrode mixture layer 32 at the regions corresponding to the normal portions 36. Here, the total thickness of the positive electrode mixture layer 32 refers to the sum of the thicknesses of the positive electrode mixture layer 32 formed on the inner circumferential side and the outer circumferential side when the positive electrode mixture layer 32 is formed on both the surfaces of the positive electrode current collector 30, and refers to the thickness of the positive electrode mixture layer 32 when the positive electrode mixture layer 32 is formed only on one surface of the positive electrode current collector 30. When the positive electrode 11 has such a configuration, the effect of restraining fracture of the positive electrode current collector 30 by the thick-walled portions 38 is more pronounced. The positive electrode 11 receives pressure from the negative electrode 12 on both the facing inner and outer circumferential sides. However, the presence of the thick-walled portions 38 in the vicinity of the positive electrode current collector exposed portion 34 can reduce the pressure received from the negative electrode 12. In the example shown in FIG. 4, the sum of the thickness T19 of the positive electrode tab 19 and the thickness T30 of the positive electrode current collector 30 (T19 + T30) is smaller than the thickness T38 of the regions corresponding to the thick-walled portions 38 and greater than the thickness T36 of the regions corresponding to the normal portions 36.

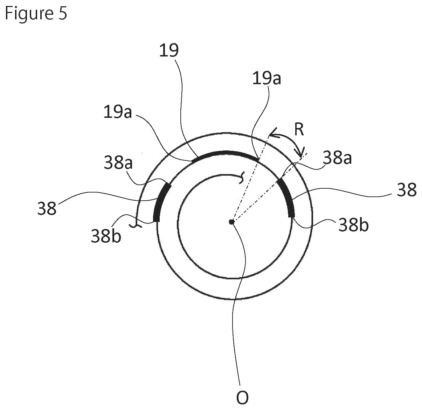

A description is now given of the cross-sectional structure of the positive electrode 11 with reference to FIG. 5. FIG. 5 is a radially sectional view of the electrode assembly 14 according to one example of the embodiment, with the vicinity of the positive electrode tab 19 being enlarged. In FIG. 5, the negative electrode 12 and the separator 13 are not shown, and only the cross-sectional structure of the positive electrode 11 is shown.

At least some regions of the thick-walled portions 38 may be arranged within 0.25 turns from the ends 19a of the positive electrode tab 19 in the longitudinal direction of the positive electrode 11. Specifically, in FIG. 5, a center angle with respect to an arc passing through the end 19a of the positive electrode tab 19 and the end 38a of the thick-walled portion 38 with the winding center axis O as a center may be less than or equal to 90°. In FIG. 5, the same relationship is established for the end 19a of the positive electrode tab 19 and the end 38a of the thick-walled portions 38, which are present more on the winding terminal side than the winding center axis O.

The thick-walled portions 38 do not preferably overlap in the radial direction of the electrode assembly 14. The other ends 38b of the thick-walled portions 38 are more preferably present within less than or equal to 0.25 turns from the center of the positive electrode tab 19. As a result, the cross-sectional shape of the outermost circumference of the electrode assembly 14 can be made into a substantially circular shape, which is preferable from the viewpoint of achieving higher capacity, for example. In the thick-walled portions 38 in FIG. 5, the ends 38a represent the ends close to the positive electrode tab 19, and the ends 38b represent the ends far from the positive electrode tab 19.

### EXAMPLES

Hereinafter, the present disclosure will be described further with examples, though the present disclosure is not limited to the following examples.

### <Example 1>

### [Fabrication of Positive Electrode Layer]

As a positive active material, lithium nickel cobalt oxide containing aluminum was used. The positive electrode active material, acetylene black (AB), and polyvinylidene fluoride (PVDF) were mixed at a mass ratio of 100:2:1, and N-methyl-2-pyrrolidone (NMP) was used as a dispersion medium to fabricate positive electrode mixture slurry. Next, the positive electrode mixture slurry was intermittently applied to both surfaces of the positive electrode current collector made of 15 µm-thick aluminum foil to form an intermittent portion with a width of 9 mm, which served as the positive electrode current collector exposed portion. After the coating was dried, the positive electrode current collector was cut and the coating was rolled with a size of 59.0 mm wide and 840 mm long so that the positive electrode current collector exposed portion with a width of 9 mm was present in a central portion of the positive electrode current collector in the longitudinal direction. At the time of rolling the coating, the pressure applied to the ranges of 5.5 mm from the ends of the positive electrode mixture layers that were adjacent to the positive electrode current collector exposed portion in the longitudinal direction of the positive electrode current collector was made weaker than the pressure applied to other regions, and the thick-walled portions were formed in those ranges. Then, the positive electrode tab made of aluminum with a length of 68 mm, a width of 5 mm, and a thickness of 100 µm was welded to the positive electrode current collector exposed portion, and a protective tape with a base layer made of PI was applied so as to cover the thick-walled portions. The protective tape was also stuck to the surface where the positive electrode tab was not connected so that the protective tapes overlapped each other. In this way, the positive electrode with the aspect shown in FIGS. 3 to 5 was fabricated. The total thickness of the positive electrode mixture layer in the regions corresponding to the normal portions was 95 µm, and the total thickness of the positive electrode mixture layer in the regions corresponding to the thick-walled portions was 98 µm.

### [Fabrication of Negative Electrode]

A mixture of graphite and SiO mixed at a mass ratio of 94:6 was used as a negative electrode active material. The negative electrode active material, styrene butadiene rubber (SBR), and carboxymethylcellulose (CMC) were mixed at a mass ratio of 100:1:1, and water was used as a dispersion medium to fabricate negative electrode mixture slurry. Next, the negative electrode mixture slurry was intermittently applied to both the surfaces of a negative electrode current collector made of 8 µm thick copper foil, and the coating was dried and rolled. The thickness of the negative electrode mixture layer was 116 µm. Then, the negative electrode current collector was cut so that the negative electrode current collector exposed portions were present on both ends of the negative electrode current collector in the longitudinal direction with a size of 59.3 mm wide and 943 mm long. A negative electrode tab made of Ni/Cu was welded to the negative electrode current collector exposed portion on the winding start side to fabricate a negative electrode. Since the negative electrode current collector exposed portion on the winding terminal side is in contact with an outer casing, the negative electrode is connected to the outer casing at both ends in the longitudinal direction.

### [Preparation of Non-aqueous Electrolyte]

A vinylene carbonate (VC) of 5 parts by mass was added to a mixed solvent of 100 parts by mass, which was formed by mixing ethylene carbonate (EC) and dimethyl carbonate (DMC) at a volume ratio of 3: 7, and lithium hexafluoride (LiPF₆) was further dissolved at a concentration of 1.3 mol/liter to fabricate a non-water electrolyte.

### [Fabrication of Test Cell]

A wound electrode assembly was fabricated by winding the positive electrode and the negative electrode in a spiral form with a separator in between. Insulating plates were arranged above and below the electrode assembly, and the electrode assembly was housed in a bottomed cylindrical outer can made of metal. The negative electrode tab was welded to a bottom portion of the outer can and the positive electrode tab was welded to a sealing assembly. After the non-aqueous electrolyte was injected into the outer can, an opening portion of the outer can was sealed by the sealing assembly through a gasket, and a 18650 type test cell was fabricated. In the electrode assembly, the circumference of the electrode assembly, including a portion where the positive electrode tab was present, was about 40 mm, and the ends of the thick-walled portions coinciding with the ends of the positive electrode current collector exposed portion were 4.5 mm from the center of the positive electrode tab, and the length of the thick-walled portions was 5.5 mm. Therefore, the other ends of the thick-walled portions were located at positions about 0.25 turns from the center of the positive electrode tab 19.

### <Example 2>

A positive electrode and a test cell were fabricated in the same way as in the example 1, except that during rolling the coating in the fabrication of the positive electrode, the pressure applied to the regions corresponding to the thick-walled portions was made weaker than the pressure in the example 1. In the positive electrode thus obtained, the total thickness of the positive electrode mixture layer in the regions corresponding to the normal portions was 95 µm, and the total thickness of the positive electrode mixture layer in the regions corresponding to the thick-walled portions was 100 µm.

### <Comparative Example>

A positive electrode and a test cell were fabricated in the same way as in the example 1, except that during rolling the coating in the fabrication of the positive electrode, the pressure applied to the regions corresponding to the normal portions in the example 1 was applied to the entire surface. The total thickness of the positive electrode mixture layer on the entire surface of the positive electrode thus obtained was 95 µm.

### [Evaluation of Fracture of Positive Electrode Current Collector]

The following charge and discharge cycle was performed 200 times on the test cells of the examples and the comparative example. After the charge and discharge cycles, the test cells were disassembled, and the presence or absence of fracture of the positive electrode current collector in the vicinity of the positive electrode tab were visually checked. The results are shown in Table 1.

### [Charge and Discharge Cycle]

Under ambient temperature of 25°C, the test cells were charged with a constant current of 3000 mA (1C) up to a battery voltage of 4.2V, then charged with a constant voltage of 4.2V until a current value becomes 100 mA (1/30C), and left for 30 minutes. Then, the test cells were discharged up to 2.5 V with a constant current of 15000 mA (5C), and left for 60 minutes, as one charge and discharge cycle.

**[Table 1]**

| | Thickness of positive electrode current collector [ *µ* m] | Thickness of positive electrode tab [ *µ* m] | Thickness of normal portion [ *µ* m] | Thickness of thick-walled portion [ *µ* m] | Presence/absence of fracture after charge and discharge cycle |
|---|---|---|---|---|---|
| Example 1 | 15 | 100 | 95 | 98 | Absent |
| Example 2 | 15 | 100 | 95 | 100 | Absent |
| Comparative example | 15 | 100 | 95 | - | Present |

As shown in Table 1, no fracture occurred in the test cells in the examples, whereas a fracture was observed in the positive electrode current collector in the vicinity of the positive electrode tab in the test cell of the comparative example. This indicates that providing the thick-walled portions that are thicker than the normal portions in the vicinity of the positive electrode current collector exposed portion can restrain the fracture of the positive electrode tab even in non-aqueous electrolyte secondary battery that supports higher output.

The present disclosure is further described with the embodiment described below.

### Configuration 1:

A non-aqueous electrolyte secondary battery, comprising: a wound electrode assembly having a strip-shaped positive electrode and negative electrode wound with a separator in between; and an outer casing that houses the electrode assembly, in which the positive electrode includes a positive electrode current collector and a positive electrode mixture layer formed on a surface of the positive electrode current collector, a positive electrode current collector exposed portion is formed on a surface of the positive electrode, the positive electrode current collector exposed portion being a portion where the positive electrode current collector is exposed, the positive electrode current collector exposed portion being connected to a positive electrode tab, the positive electrode mixture layer includes normal portions and thick-walled portions that are thicker than the normal portions, and the thick-walled portions are in proximity to both ends of the positive electrode current collector exposed portion in a longitudinal direction of the positive electrode.

### Configuration 2:

The non-aqueous electrolyte secondary battery according to Configuration 1, in which at least some regions of the thick-walled portions are arranged within 0.25 turns from ends of the positive electrode tab in the longitudinal direction of the positive electrode.

### Configuration 3:

The non-aqueous electrolyte secondary battery according to Configuration 1 or 2, in which the positive electrode tab has a thickness that is smaller than a total thickness of the positive electrode mixture layer at regions corresponding to the thick-walled portions and greater than a total thickness of the positive electrode mixture layer at regions corresponding to the normal portions.

### Configuration 4:

The non-aqueous electrolyte secondary battery according to any one of Configurations 1 to 3, in which entire surfaces of the thick-walled portions are covered with a protective tape.

### Configuration 5:

The non-aqueous electrolyte secondary battery according to any one of Configurations 1 to 4, in which the thick-walled portions do not overlap in a radial direction of the electrode assembly.

### Configuration 6:

The non-aqueous electrolyte secondary battery according to any one of Configurations 1 to 5, in which the negative electrode includes a negative electrode current collector and a negative electrode mixture layer formed on a surface of the negative electrode current collector, and the negative electrode mixture layer contains an Si-containing compound.

### REFERENCE SIGNS LIST

10 Secondary battery, 11 Positive electrode, 12 Negative electrode, 13 Separator, 14 Electrode assembly, 15 Outer casing, 16 Sealing assembly, 17, 18 Insulating plate, 19 Positive electrode tab, 20 Negative electrode tab, 21 Grooved portion, 22 Filter, 23 Lower vent member, 24 Insulating member, 25 Upper vent member, 26 Cap, 26a Opening portion, 27 Gasket, 30 Positive electrode current collector, 32 Positive electrode mixture layer, 34 Positive electrode current collector exposed portion, 36 Normal portion, 38 Thick-walled portion, 40 Protective tape, O Winding center axis

## Claims

1. A non-aqueous electrolyte secondary battery, comprising:
a wound electrode assembly having a strip-shaped positive electrode and negative electrode wound with a separator in between; and
an outer casing that houses the electrode assembly, wherein
the positive electrode includes a positive electrode current collector and a positive electrode mixture layer formed on a surface of the positive electrode current collector,
a positive electrode current collector exposed portion is formed on a surface of the positive electrode, the positive electrode current collector exposed portion being a portion where the positive electrode current collector is exposed, the positive electrode current collector exposed portion being connected to a positive electrode tab,
the positive electrode mixture layer includes normal portions and thick-walled portions that are thicker than the normal portions, and
the thick-walled portions are in proximity to both ends of the positive electrode current collector exposed portion in a longitudinal direction of the positive electrode.

2. The non-aqueous electrolyte secondary battery according to claim 1, wherein at least some regions of the thick-walled portions are arranged within 0.25 turns from ends of the positive electrode tab in the longitudinal direction of the positive electrode.

3. The non-aqueous electrolyte secondary battery according to claim 1, wherein the positive electrode tab has a thickness that is smaller than a total thickness of the positive electrode mixture layer at regions corresponding to the thick-walled portions and greater than a total thickness of the positive electrode mixture layer at regions corresponding to the normal portions.

4. The non-aqueous electrolyte secondary battery according to claim 1, wherein entire surfaces of the thick-walled portions are covered with a protective tape.

5. The non-aqueous electrolyte secondary battery according to claim 1, wherein the thick-walled portions do not overlap in a radial direction of the electrode assembly.

6. The non-aqueous electrolyte secondary battery according to claim 1, wherein the negative electrode includes a negative electrode current collector and a negative electrode mixture layer formed on a surface of the negative electrode current collector, and
the negative electrode mixture layer contains an Si-containing compound.
